# FASCICULE DE BREVET EUROPEEN

(11) **EP 1 208 961 B1**
(45) Date de publication et mention de la délivrance du brevet: **07.01.2004**
(21) Numéro de dépôt: 01403029.0
(22) Date de dépôt: 27.11.2001
(51) Int. Cl.: B29C 70/34, B29C 70/86

(54) **Ensemble formé par au moins une pale et une plate-forme de fixation de la pale, pour une turbomachine, et procédé pour sa fabrication**
Anordnung aus einer Schaufel und einer Befestigungsplatte dafür, für eine Turbomaschine, und Verfahren zu deren Herstellung
Assembly formed of a blade and base for fixing the blade for a turbo machine and method for its manufacture

(30) Priorité: 28.11.2000 FR 0015325
(43) Date de publication de la demande: 29.05.2002
(73) Titulaire: SNECMA MOTEURS, 75015 Paris (FR)
(72) Inventeur: Marlin, François, 77760 Villiers sous Grez (FR); Ribassin, François, 91100 Villabe (FR); Mathias, Cyrille, 93190 Livry Gargan (FR)
(74) Mandataire: Joly, Jean-Jacques

(56) Documents cités:
- GB-A- 1 375 327
- US-A- 5 292 231

## Description

### Arrière-plan de l'invention

L'invention concerne un ensemble formé par au moins une pale et une plate-forme de fixation de la pale, ainsi qu'un procédé de fabrication d'un tel ensemble.

Le domaine d'application de l'invention est celui des turbomachines, en particulier, mais non exclusivement, la réalisation d'ensembles redresseurs pour des turbomachines.

De façon habituelle, les pales de redresseurs de turbomachines sont fixées à des carters supérieur et inférieur par l'intermédiaire de plates-formes auxquelles les extrémités des pales sont reliées.

Un mode couramment utilisé pour réaliser la liaison entre une pale et une plate-forme consiste à effectuer un collage d'une partie d'extrémité de la pale insérée dans un logement de la plate-forme. Une telle liaison collée peut s'avérer insuffisante.

Dans le cas de pales en matériau composite comprenant des strates de renfort fibreux drapées sur un noyau de pale, il a été proposé d'améliorer la liaison avec la plate-forme en prolongeant des strates de renfort au-delà de l'extrémité de la pale reliée à la plate-forme et en intégrant les prolongements de strates à la plate-forme. Les prolongements de strates de renfort s'étendent jusqu'au niveau de zones de fixation de la plate-forme sur un carter pour être localement enserrées entre le carter et des éléments de fixation de la plate-forme sur celui-ci, comme décrit dans US-A-5292231 et le préambule des revendications 1 et 7.

### Objet et résumé de l'invention

L'invention a pour but d'améliorer encore la liaison structurelle entre une pale et une plate-forme.

Ce but est atteint au moyen d'un procédé selon lequel la réalisation de la pale comprend le drapage sur un noyau de pale de strates de renfort fibreux qui, au moins pour une partie d'entre elles, s'étendent au-delà d'une extrémité de la pale destinée à être reliée à la plate-forme pour former des prolongements de strates, et les prolongements de strates sont rabattus au niveau de la plate-forme pour former des rabats assurant une liaison structurelle entre la pale et la plate-forme, procédé dans lequel, conformément à l'invention, l'on utilise une pièce constituant une âme de la plate-forme, ayant une forme voisine de celle de la plate-forme avec une face intérieure et une face extérieure opposées l'une à l'autre, l'on rabat des prolongements de strates contre la face intérieure et contre la face extérieure de l'âme de la plate-forme pour former des rabats d'encastrement de la pale sur la plate-forme, et l'on drape des strates de renfort fibreux autour de l'âme de la plate-forme et par-dessus les rabats d'encastrement pour former un caisson de plate-forme emprisonnant les rabats d'encastrement.

Le procédé selon l'invention est remarquable en ce qu'il permet de réaliser une liaison structurelle encastrée particulièrement résistante entre la pale et la plate-forme du fait de la présence de rabats d'encastrement qui enserrent l'âme de la plate-forme et sont eux-mêmes emprisonnés par des strates drapées autour de l'âme de la plate-forme.

Avantageusement, une partie des prolongements de strates ainsi que l'extrémité de pale sont engagés dans un passage formé à travers l'âme de la plate-forme et ayant une section de forme correspondant au profil de l'extrémité de pale, ces prolongements de strates et l'extrémité de pale étant engagés dans le passage à partir de la face intérieure de l'âme de la plate-forme, et les prolongements de strates ayant traversé l'âme de la plate-forme étant rabattus sur la face extérieure de celle-ci tandis que d'autres prolongements de strates non introduits dans le passage sont rabattus sur la face intérieure de l'âme de la plate-forme.

Avantageusement encore, les strates drapées autour du noyau de pale et les strates drapées autour de l'âme de la plate-forme sont imprégnées par une résine et un traitement thermique est réalisé simultanément sur l'ensemble des strates imprégnées maintenu en forme. On pourra réaliser un drapage de strates préimprégnées ou un drapage de strates sèches qui sont imprégnées par injection de résine dans un moule selon le procédé classique RTM ("Resin Transfer Moulding" ou moulage avec transfert de résine). De la sorte, une liaison structurelle est réalisée par polymérisation, dans le même temps, de la résine imprégnant les strates drapées autour du noyau de l'aube et de celle imprégnant les strates drapées autour de l'âme de la préforme.

L'invention a aussi pour objet un ensemble formé par au moins une pale en matériau composite et une plate-forme de montage de la pale, tel qu'il peut être obtenu par le procédé ci-dessus.

### Brève description des dessins

L'invention sera mieux comprise à la lecture de la description faite ci-après, à titre indicatif mais non limitatif, en référence aux dessins annexés, sur lesquels :
- la figure 1 est une vue schématique en perspective montrant un ensemble pale-plate-forme pour redresseur de turbomachine ;
- la figure 2 est une vue schématique en perspective d'un noyau de pale ;
- la figure 3 est une vue schématique montrant le drapage de strates de renfort fibreux sur le noyau de pale de la figure 2 ;
- la figure 4 est une vue schématique en perspective d'une âme de plate-forme ;
- la figure 5 est une vue schématique en coupe à échelle agrandie montrant le montage d'une extrémité de pale sur l'âme de plate-forme de la figure 4 ;
- la figure 6 est une vue schématique partielle également à échelle agrandie montrant le drapage de strates de renfort fibreux autour de l'âme de la plate-forme ;
- la figure 7 est une vue en coupe de la plate-forme après assemblage avec une extrémité de pale ;
- la figure 8 est une vue en coupe d'un insert destiné à être mis en place à travers une plate-forme ;
- la figure 9 est une vue schématique en perspective montrant un ensemble comprenant deux pales reliées à une même plate-forme, pour redresseur de turbomachine ; et
- la figure 10 est une vue schématique en perspective d'une âme de plate-forme pour l'ensemble de la figure 9.

### Description détaillée de modes de réalisation

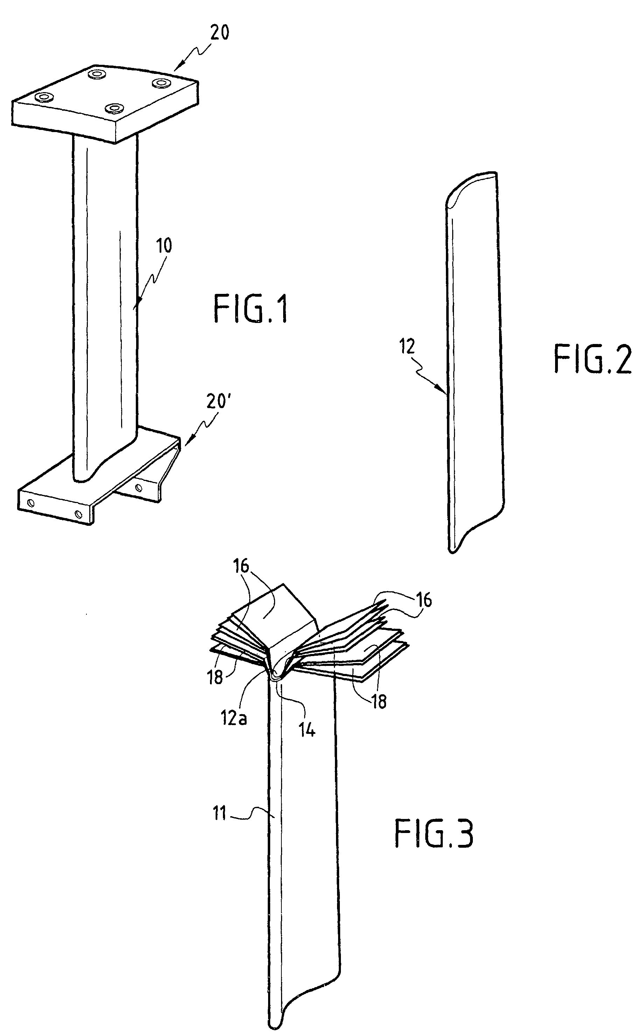

La figure 1 montre un ensemble pale-plates-formes pour redresseur de turbomachine susceptible d'être réalisé conformément à l'invention.

L'invention n'est pas limitée à cette application.

Sur la figure 1, la pale 10 est reliée à une extrémité à une plate-forme supérieure 20 et, à l'autre extrémité, à une plate-forme inférieure 20'. La plate-forme supérieure est destinée à être fixée sur un carter supérieur (ou extérieur) non représenté, tandis que la plate-forme inférieure est destinée à être fixée sur un carter inférieur (ou intérieur) non représenté, de façon bien connue en soi.

On décrira ci-après en référence aux figures 2 à 7, la réalisation de la liaison entre la pale et la plate-forme supérieure 20, étant noté qu'un même type de liaison pourrait être envisagé entre la pale et la plate-forme inférieure.

La pale est en matériau composite et est réalisée par drapage de strates de renfort fibreux autour d'un noyau de pale pour former une enveloppe composite de pale.

Le noyau de pale 12 (figure 2) peut être constitué par une pièce monobloc en mousse rigide, par exemple en mousse de polyuréthane, ayant un profil de forme correspondant à celle du profil de la pale à réaliser, mais de section plus réduite.

Des strates 14 de renfort fibreux sont drapées autour du noyau 12 (figure 3) pour former l'enveloppe composite de la pale. Les strates 14 sont par exemple des nappes bidimensionnelles, telles que des tissus, en fibres de carbone.

Les strates 14 ont une dimension supérieure à celle de la pale, dans la direction longitudinale de celle-ci et dépassent à l'extrémité 12a du noyau de pale destinée à être reliée à la plate-forme. Les parties de nappes dépassant à cette extrémité sont le cas échéant découpées pour former des ailes 16, 18 dans le prolongement des faces principales de l'aube.

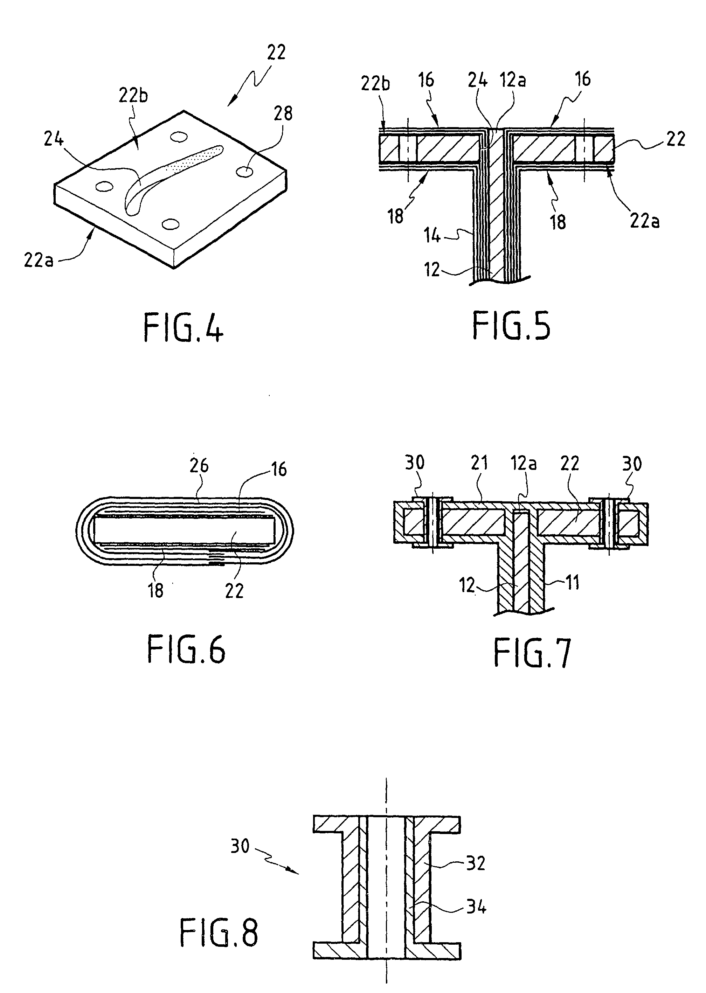

La plate-forme est constituée autour d'une âme 22 (figure 4) qui peut être constituée par un bloc de mousse rigide, par exemple en mousse de polyuréthane. Le bloc 22 a une forme générale approximativement parallélépipédique et présente un passage 24 qui le traverse entre sa face intérieure 22a et sa face extérieure 22b. Le passage 24 a une section de forme correspondant à celle du profil de l'extrémité de pale destinée à être reliée à la plate-forme.

Pour réaliser la liaison entre la pale et la plate-forme, l'extrémité 12a du noyau de pale ainsi qu'une partie des ailes ou prolongements de strates 14 sont engagées dans le passage 24, à partir de la face intérieure 22a de l'âme de la plate-forme (figure 5). Les prolongements 16 engagés dans le passage 24 font de préférence partie des strates drapées en premier sur le noyau de pale 12, par exemple font partie de la première moitié des strates drapées sur le noyau 12. Les prolongements restants 18 provenant de la deuxième partie des strates drapées sur le noyau 12 ne sont pas introduits dans le passage 24.

Lorsque la face de l'extrémité 12a du noyau de pale est parvenue au niveau de la face extérieure 22b de l'âme de la plate-forme, les prolongements 16 sont rabattus sur cette face extérieure 22b, de part et d'autre du passage 24, tandis que les prolongements 18 sont rabattus sur la face intérieure 22a, également de part et d'autre du passage 24.

Des strates de renfort fibreux 26, qui présentent une découpe pour le passage de la pale 10, sont ensuite drapées autour de l'âme 22 de la plate-forme, par-dessus les rabats 16, 18 des strates 14 (figure 6) pour former un caisson de plate-forme. Les strates 26 peuvent être de même nature que les strates 14, ou être de nature différente.

Les strates 14, 26 sont imprégnées par une résine. On pourra utiliser des strates préimprégnées avant drapage, ou des strates sèches imprégnées après drapage. La résine d'imprégnation des strates 14 et celle d'imprégnation des strates 26 sont réticulées par un même traitement thermique réalisé sur l'ensemble des strates 14, 26. On obtient ainsi une enveloppe composite 11 de pale et un caisson composite 21 de plate-forme (figure 7) tout en réalisant la liaison structurelle recherchée avec encastrement de la pale sur la plate-forme au moyen des rabats 16, 18 emprisonnés par le caisson composite entourant l'âme de la plate-forme.

Des inserts 30 de préférence métalliques, par exemple en aluminium, sont mis en place à travers la plate-forme, en passant à travers le caisson de celle-ci et dans des passages 28 formés dans l'âme 22 (figure 4). Comme le montre la figure 7, les inserts 30 sont formés de deux parties tubulaires 32, 34 emmanchées l'une dans l'autre et présentant des rebords annulaires qui sont appliqués sur les faces intérieure et extérieure de la plate-forme. Les inserts 30 permettent le passage d'éléments de fixation de la plate-forme sur un carter.

On notera que la mise en place des inserts peut être réalisée avant la réticulation de la résine d'imprégnation des strates 14, 26.

La figure 8 montre un ensemble comprenant deux pales 10, 10' reliées à une même plate-forme 40.

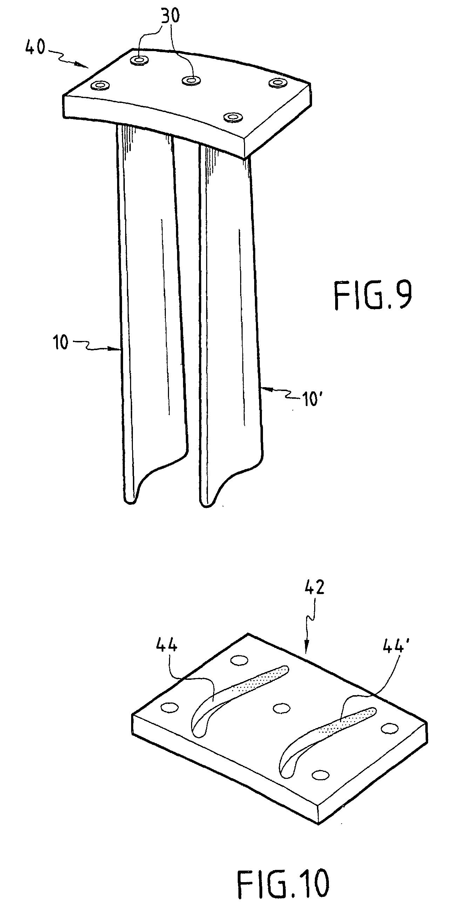

Les pales sont reliées à la plate-forme par un procédé analogue à celui décrit plus haut. La plate-forme 40 comprend une âme 42 (figure 9) qui se distingue de celle 22 de la figure 4 en ce qu'elle présente deux passages 44, 44' pour les extrémités des pales 10, 10'.

Comme précédemment, les pales 10, 10' sont formées par drapage de strates de renfort fibreux autour de noyaux de pale, en formant des prolongements qui sont rabattus sur les faces inférieure et extérieure de l'âme 42 de la plate-forme. Un caisson de plate-forme est ensuite réalisé par bobinage de strates de renfort fibreux autour de l'âme 42, par-dessus les rabats des strates de renfort des pales.

Des inserts 30 sont mis en place à travers la plate-forme avant ou après réticulation de la résine d'imprégnation des strates de renfort des enveloppes de pale et du caisson de plate-forme.

## Revendications

1. Procédé de réalisation d'un ensemble formé par au moins une pale en matériau composite (10) et une plate-forme (20) de montage de la pale dans une turbomachine, procédé selon lequel la réalisation de la pale comprend le drapage sur un noyau de pale (12) de strates de renfort fibreux (26) qui, au moins pour une partie d'entre elles, s'étendent au-delà d'une extrémité de la pale (12a) destinée à être reliée à la plate-forme pour former des prolongements de strates (16, 18) et les prolongements de strates sont rabattus au niveau de la plate-forme pour former des rabats assurant une liaison structurelle entre la pale et la plate-forme,
**caractérisé en ce que** l'on utilise une pièce (22) constituant une âme de la plate-forme, ayant une forme voisine de celle de la plate-forme avec une face intérieure (22a) et une face extérieure (22b) opposées l'une à l'autre, l'on rabat des prolongements de strates contre la face intérieure (22a) et contre la face extérieure (22b) de l'âme de la plate-forme pour former des rabats d'encastrement de la pale (10) sur la plate-forme (20), et l'on drape des strates de renfort fibreux (26) autour de l'âme de la plate-forme et par-dessus les rabats d'encastrement pour former un caisson de plate-forme (21) emprisonnant les rabats d'encastrement.

2. Procédé selon la revendication 1, **caractérisé en ce qu'**une partie des prolongements de strates (14) ainsi que l'extrémité de pale (12a) sont engagés dans un passage (24) formé à travers l'âme de la plate-forme (22) et ayant une section de forme correspondant au profil de l'extrémité de pale, ces prolongements de strates et l'extrémité de pale étant engagés dans le passage à partir de la face intérieure (22a) de l'âme de la plate-forme, et les prolongements de strates ayant traversé l'âme de la plate-forme étant rabattus sur la face extérieure (22b) de celle-ci tandis que d'autres prolongements de strates (18) non introduits dans le passage (24) sont rabattus sur la face intérieure (22a) de l'âme de la plate-forme.

3. Procédé selon l'une quelconque des revendications 1 et 2, **caractérisé en ce que** les strates (14) drapées autour du noyau de pale (12) et les strates (26) drapées autour de l'âme de la plate-forme (22) sont imprégnées par une résine avant ou après drapage et un traitement thermique est réalisé simultanément sur l'ensemble des strates imprégnées.

4. Procédé selon l'une quelconque des revendications 1 à 3, **caractérisé en ce que** l'âme de la plate-forme (22) est en une mousse rigide.

5. Procédé selon l'une quelconque des revendications 1 à 4, **caractérisé en ce que** l'on met en place, à travers la plate-forme, des inserts (30) présentant des passages pour des éléments de fixation de la plate-forme.

6. Procédé selon l'une quelconque des revendications 1 à 5, **caractérisé en ce que** l'on relie deux aubes au moins (10, 10') à une même plate-forme (40).

7. Ensemble pour turbomachine formé par au moins une pale (10) en matériau composite et une plate-forme (20) de montage de la pale à laquelle une extrémité de la pale est reliée, la pale comprenant des strates de renfort fibreux qui sont drapées sur un noyau de pale (12) et qui présentent des prolongements s'étendant au-delà de l'extrémité de la pale et intégrés dans la plate-forme,
**caractérisé en ce que** la plate-forme (20) comprend une âme (22) ayant une face intérieure et une face extérieure sur lesquelles sont rabattus des prolongements (16, 18) de strates de renfort de la pale formant des rabats d'encastrement de la pale sur la plate-forme, et un caisson composite (21) entourant l'âme et comprenant des strates de renfort drapées sur l'âme de la plate-forme, par-dessus les rabats d'encastrement.

8. Ensemble selon la revendication 7, **caractérisé en ce que** l'extrémité de pale reliée à la plate-forme est engagée à travers un passage (24) formé dans l'âme (22) de la plate-forme, à partir de la face intérieure de celle-ci, et les prolongements de strates rabattus sur la face extérieure de l'âme de la plate-forme passent à travers ledit passage.

9. Ensemble selon la revendication 8, **caractérisé en ce que** l'âme (22) de la plate-forme est en mousse.

10. Ensemble selon l'une quelconque des revendications 7 à 9, **caractérisé en ce qu'**il comporte des inserts (30) qui s'étendent à travers la plate-forme (20) et qui présentent des passages pour des éléments de fixation de la plate-forme.

11. Ensemble selon l'une quelconque des revendications 7 à 10, **caractérisé en ce qu'**il comporte au moins deux pales (10, 10') reliées à une même plate-forme (40).

## Claims

1. A method of making an assembly formed by at least one composite material blade (10) and a platform (20) for mounting the blade in a turbomachine, in which method the blade is made by draping fibre reinforcement plies (26) on a blade core (12), with at least a fraction of the plies extending beyond an end of the blade (12a) for connection to the platform so as to form ply extensions (16, 18), and the ply extensions are folded down onto the platform to form flaps that provide a structural connection between the blade and the platform,
the method being **characterised in that** a part (22) is used that constitutes a platform web, having a shape that is close to the shape of the platform with an inside face (22a) and an outside face (22b) that are opposite each other, the ply extensions are folded down against the inside face (22a) and against the outside face (22b) of the web of the platform so as to form flaps for securing the blade (10) to the platform (20), and fibre reinforcement plies (26) are draped around the web of the platform and over the flaps so as to form a platform box (21) holding the flaps captive.

2. A method according to claim 1, **characterised in that** a fraction of the ply extensions (14) and the end of the blade (12a) are engaged in a passage (24) formed through the web of the platform (22) and having a section of shape that corresponds to the end profile of the blade, these ply extensions and the blade end being engaged in the passage from the inside face (22a) of the platform web, and the ply extensions that have passed through the platform web being folded down onto the outside face (22b) thereof, while other ply extensions (18) that have not been inserted in the passage (24) are folded down onto the inside face (22a) of the platform web.

3. A method according to claim 1 or claim 2, **characterised in that** the plies (14) draped around the blade core (12) and the plies (26) draped around the platform web (22) are impregnated in resin before or after draping, and heat treatment is performed simultaneously on all of the impregnated plies.

4. A method according to any one of claims 1 to 3, **characterised in that** the platform web (22) is made of a rigid foam.

5. A method according to any one of claims 1 to 4, **characterised in that** inserts (30) are installed through the platform, the inserts providing passages for fasteners for fixing the platform.

6. A method according to any one of claims 1 to 5, **characterised in that** at least two blades (10, 10') are connected to a common platform (40).

7. An assembly for a turbomachine, the assembly comprising at least one blade (10) of composite material together with a platform (20) for mounting the blade and to which one end of the blade is connected, the blade comprising fibre reinforcement plies which are draped on a blade core (12) and which present extensions extending beyond the end of the blade and integrated in the platform,
the assembly being **characterised in that** the platform (20) comprises a web (22) having an inside face and an outside face onto which reinforcement ply extensions (16, 18) of the blade are folded down to form flaps for securing the blade to the platform, and a composite box (21) surrounding the web and comprising reinforcement plies draped on the platform web over the flaps.

8. An assembly according to claim 7, **characterised in that** the blade end connected to the platform is engaged through a passage (24) formed in the platform web (22) from the inside face thereof, and the ply extensions folded down onto the outside face of the platform web pass through said passage.

9. An assembly according to claim 8, **characterised in that** the platform web (22) is made of foam.

10. An assembly according to any one of claims 7 to 9, **characterised in that** it includes inserts (30) extending through the platform (20) and presenting passages for fasteners for fixing the platform.

11. An assembly according to any one of claims 7 to 10, **characterised in that** it comprises at least two blades (10, 10') connected to a common platform (40).

## Patentansprüche

1. Verfahren zur Herstellung einer Anordnung aus mindestens einer Schaufel aus Verbundmaterial (10) und einer Befestigungsplatte (20) der Schaufel in einer Turbomaschine, bei welchem die Herstellung der Schaufel das Umhüllen eines Kerns der Schaufel (12) mit faserverstärkten Schichten (26) aufweist, wobei sich zumindest eine Teilanzahl der Schichten über ein Ende der Schaufel (12a) hinaus erstreckt, das dazu bestimmt ist, mit der Plattform verbunden zu werden, indem Verlängerungen der Schichten (16, 18) gebildet werden; und bei welchem die Verlängerungen der Schichten an der Befestigungsplatte umgeschlagen werden, um Umschläge zu bilden, welche eine belastbare Verbindung zwischen der Schaufel und der Befestigungsplatte gewährleisten, **dadurch gekennzeichnet,**
**dass** ein Bauteil (22), welches ein Innenteil der Befestigungsplatte bildet, verwendet wird, welches eine Form hat, die der Form der Befestigungsplatte angenähert ist, mit einer Innenseite (22a) und einer Außenseite (22b), welche einander entgegengesetzt sind;
**dass** die Verlängerungen der Schichten auf die Innenseite (22a) und die Außenseite (22b) des Innenteils der Befestigungsplatte umgeschlagen werden, um eingepasste Umschläge der Schaufel (10) auf der Befestigungsplatte (20) zu bilden; und
**dass** Schichten der Faserverstärkung (26) um das Innenteil der Befestigungsplatte und über die eingepassten Umschläge gehüllt werden, um eine Umschließung der Befestigungsplatte (21) zu bilden, welches die eingepassten Umschläge umschließt.

2. Verfahren nach Anspruch 1, **dadurch gekennzeichnet, dass** ein Teil der Verlängerungen der Schichten (14) wie auch das Ende der Schaufel (12a) in eine Öffnung (24), die durch das Innenteil der Befestigungsplatte (22) hindurch gebildet ist, und einen dem Profil des Schaufelendes entsprechenden Querschnitt hat, eingelassen sind, wobei diese Verlängerungen der Schichten und das Ende der Schaufel von der Innenseite (22a) des Innenteils der Befestigungsplatte aus eingelassen sind und die Verlängerungen der Schichten, welche durch das Innenteil der Befestigungsplatte durchreichen, auf die Außenseite (22b) derselben umgeschlagen sind, wohingegen andere Verlängerungen der Schichten (18) die nicht in die Öffnung (24) eingeführt sind, auf die Innenseite (22a) des Innenteils der Befestigungsplatte umgeschlagen sind.

3. Verfahren nach einem der Ansprüche 1 oder 2, **dadurch gekennzeichnet, dass** die Schichten (14) welche um den Kern der Schaufel (12) gehüllt sind, und die Schichten (26), welche um das Innenteil der Befestigungsplatte (22) gehüllt sind, vor oder nach der Umhüllung mit einem Harz imprägniert werden und eine thermische Behandlung mit der Gesamtheit der imprägnierten Schichten gleichzeitig durchgeführt wird.

4. Verfahren nach einem der Ansprüche 1 bis 3, **dadurch gekennzeichnet, dass** das Innenteil der Befestigungsplatte (22) aus einem festen Schaum besteht.

5. Verfahren nach einem der Ansprüche 1 bis 4, **dadurch gekennzeichnet, dass** durch die Befestigungsplatte hindurch Einsätze (30) angeordnet werden, welche Öffnungen für Befestigungselemente der Befestigungsplatte darstellen.

6. Verfahren nach einem der Ansprüche 1 bis 5, **dadurch gekennzeichnet, dass** man mindestens zwei Schaufeln (10, 10') auf einer gleichen Plattform (40) befestigt.

7. Anordnung für eine Turbomaschine gebildet aus mindestens einer Schaufel (10) aus Verbundmaterial und einer Befestigungsplatte (20) der Schaufel, an welcher ein Ende der Schaufel befestigt ist, wobei die Schaufel faserverstärkte Schichten aufweist, welche um einen Kern der Schaufel (12) gehüllt sind, und welche Verlängerungen besitzen, die sich über das Ende der Schaufel hinaus erstrecken und mit der Befestigungsplatte integriert sind,
**dadurch gekennzeichnet,**
**dass** die Befestigungsplatte (20) ein Innenteil (22) mit einer Innenseite und einer Außenseite aufweist, auf welchen die Verlängerungen (16, 18) der Verstärkungsschichten der Schaufel umgeschlagen sind, wobei sie eingepasste Umschläge der Schaufel auf der Befestigungsplatte bilden, und
**dass** sie eine Verbundumschließung (21) über den eingepassten Umschlägen aufweist, welche das Innenteil umschließt und Verstärkungschichten aufweist, welche um das Innenteil der Befestigungsplatte gehüllt sind.

8. Anordnung nach Anspruch 7, **dadurch gekennzeichnet, dass** das mit der Befestigungsplatte verbundene Ende der Schaufel durch eine im Innenteil (22) der Befestigungsplatte gebildete Öffnung (24) von der Innenseite der selben aus eingelassen ist und dass die auf die Außenseite des Innenteils der Befestigungsplatte umgeschlagenen Schichten durch diese Öffnung hindurch reichen.

9. Anordnung nach Anspruch 8, **dadurch gekennzeichnet, dass** das Innenteil (22) der Befestigungsplatte aus Schaum besteht.

10. Anordnung nach einem der Ansprüche 7 bis 9, **dadurch gekennzeichnet, dass** sie Einsätzte (30) aufweist, die sich durch die Befestigungsplatte (20) hindurch erstrecken und die Öffnungen für Befestigungselemente der Befestigungsplatte darstellen.

11. Anordnung nach einem der Ansprüche 7 bis 10, **dadurch gekennzeichnet, dass** sie mindestens zwei Schaufeln (10, 10') aufweist, die mit einer gleichen Befestigungsplatte (40) verbunden sind.
